# EUROPÄISCHE PATENTSCHRIFT

(11) **EP 2 270 322 B1**
(45) Veröffentlichungstag und Bekanntmachung des Hinweises auf die Patenterteilung: **29.02.2012**
(21) Anmeldenummer: 09008408.8
(22) Anmeldetag: 26.06.2009
(51) Int. Cl.: F02C 7/12, F25B 15/00, H02K 9/00

(54) **Kühlkreislauf zum Abführen von Abwärme eines elektromechanischen Wandlers und Kraftwerksanlage mit einem derartigen Kühlkreislauf**
Cooling circuit for removing waste heat from an electromechanical convertor and power plant assembly with such a cooling circuit
Circuit de refroidissement destiné à évacuer la chaleur d'un convertisseur électromécanique et centrale dotée d'un circuit de refroidissement de ce type

(43) Veröffentlichungstag der Anmeldung: 05.01.2011
(73) Patentinhaber: Siemens Aktiengesellschaft, 80333 München (DE)
(72) Erfinder: Amedick, Volker, 47198 Duisburg (DE); Blomeyer, Malte, Dr., 45472 Mülheim an der Ruhr (DE); Cravero, Leandro, Dr., 45479 Mülheim an der Ruhr (DE); Deuker, Eberhard, Dr., 45481 Mülheim an der Ruhr (DE); Heitfeld, Hendrik, 45966 Gladbeck (DE); Kaufmann, Carsten, 45478 Mülheim an der Ruhr (DE); Klocke, Meinolf, Dr., 58452 Witten (DE); Völker, Stefan, Dr., 47447 Moers (DE)

(56) Entgegenhaltungen:
- DE-A1- 3 726 493
- JP-A- 2004 012 102
- US-A1- 2003 016 499
- US-A1- 2009 097 205

## Beschreibung

Die vorliegende Erfindung betrifft einen Kühlkreislauf zum Abführen von Abwärme eines elektromechanischen Wandlers, etwa eines Elektromotors und insbesondere eines Generators. Daneben betrifft die Erfindung eine Kraftwerksanlage mit einer Turbine, einem Generator und einem Kühlkreislauf zum Abführen von Abwärme des Generators.

Der heutige Energiemarkt wächst so rapide, dass beispielsweise Gasturbinenkraftwerke teilweise am Auslieferungstag bereits nicht mehr der geplanten Nachfrage entsprechen. Eine schnelle nachträgliche Erhöhung der Kraftwerksleistung kann grundsätzlich über ein Nachrüsten der Gasturbine realisiert werden. Hierbei sind durchaus Leistungssteigerungen bis zu 20 % möglich. Die Leistungssteigerungen müssen jedoch an die am knappsten ausgelegte Komponente, d.h. diejenige Komponente, die die geringste Leistungssteigerung zulässt, angepasst werden, so dass diese Komponente, die in einem Gasturbinenkraftwerk durch Nachrüsten mögliche Leistungssteigerung begrenzt. In der Regel ist diese Komponente der Generator, dessen Kupfertemperaturen die Grenze für die Leistungssteigerung durch Nachrüsten bilden.

Es ist möglich, die Kupfertemperatur des Generators durch Kühlung zu senken. Dies kann beispielsweise über eine Kühlung der Generatoreintrittsluft realisiert werden, aber auch ein Kühlkreislauf für den Generator, in welchem einer Kühleinrichtung des Generators gekühltes Wasser zugeführt wird, welches dort Wärme aufnimmt, die dem erwärmten Wasser später wieder entzogen wird, bevor es in die Kühleinrichtung rückgeführt wird, ist möglich. Ein solcher Kühlkreislauf ist beispielsweise in US 2008/0178590 A1 beschrieben. Das Kühlen des erwärmten Wassers erfolgt darin entweder durch eine Absorptionskälteanlage, die durch erwärmte Kompressorluft, Abgas der Gasturbine oder Dampf einer Dampfturbine angetrieben wird, oder durch einen mechanischen Kühler, also einen auf einem mechanischen Verdichtungsprozess beruhenden Kühler, der durch vom Generator erzeugter Elektrizität angetrieben wird.

Insbesondere, wenn die Wärme zum Antreiben der Absorptionskälteanlage der Verdichterluft oder dem Dampf einer Dampfturbine entzogen wird, ist dieser Wärmeentzug in der Betriebsführung der Turbine mit einzuplanen. Ein Entzug elektrischer Energie aus dem Generator zum Antreiben eines mechanischen Verdichters verringert die mögliche Nutzleistung des Generators.

Aus US 2003/0016499 A1 und JP 2004012102 A sind Kühlkreisläufe mit Absorptionskältemaschinen, in denen die Absorptionskältemaschine durch die Wärme des im Rücklauf befindlichen warmen Kältemittels angetrieben wird, bekannt.

Aufgabe der vorliegenden Erfindung ist es, einen vorteilhaften Kühlkreislauf für einen elektromechanischen Wandler wie etwa einen Generator oder einen Elektromotor zur Verfügung zu stellen. Es ist eine weitere Aufgabe der vorliegenden Erfindung, eine vorteilhafte Kraftwerksanlage zur Verfügung zu stellen.

Die erste Aufgabe wird durch einen Kühlkreislauf nach Anspruch 1 gelöst, die zweite Aufgabe durch eine Kraftwerksanlage nach Anspruch 6. Die abhängigen Ansprüche enthalten vorteilhafte Ausgestaltungen der Erfindung.

Ein erfindungsgemäßer Kühlkreislauf zum Abführen von Abwärme aus einer Kühleinrichtung eines elektromechanischen Wandlers wie etwa eines Elektromotors oder insbesondere eines Generators umfasst ein Kältemittel, einen Kühler zum Entzug von Wärme aus dem Kältemittel, einen die Kühleinrichtung des Wandlers mit dem Kühler zum Leiten warmen Kältemittels verbindenden Rücklauf, einen den Kühler mit der Kühleinrichtung des Wandlers zum Leiten kühlen Kältemittels verbindenden Vorlauf sowie eine Absorptionskältemaschine, beispielsweise eine Wasser-Siliziumbromid-Absorptionskältemaschine oder eine Ammoniak-Wasser-Absorptionskältemaschine, zum weiteren Entzug von Wärme aus dem Kältemittel. Die Absorptionskältemaschine wird durch die Wärme des im Rücklauf befindlichen warmen Kältemittels angetrieben. Im erfindungsgemäßen Kühlkreislauf ist ein Verdampfer der Absorptionskältemaschine mit dem Vorlauf zur Aufnahme von Wärme verbunden. Außerdem ist ein Austreiber der Absorptionskältemaschine mit dem Rücklauf zur Aufnahme von Wärme verbunden. Das Kühlen des Kältemittels erfolgt daher sowohl im Vorlauf als auch im Rücklauf, wodurch eine besonders effektive Kühlung über die Kühlung im Kühler hinaus möglich wird.

Mittels der Absorptionskältemaschine, die zusätzlich zum Kühler vorhanden ist, kann die Temperatur des der Kühleinrichtung des Wandlers über den Vorlauf wieder zugeführten Kältemittels über die Kühlung im Kühler hinaus weiter abgekühlt werden. Die Absorptionskältemaschine erhöht daher die Kühlleistung. Da diese durch die Abwärme des Wandlers angetrieben wird, die sowieso verloren ginge, wenn sie nicht durch die Absorptionskältemaschine genutzt würde, braucht die entzogene Wärme im übrigen nicht weiter berücksichtigt zu werden, was beispielsweise der Fall wäre, wenn die Wärme dem Verdichter einer Gasturbine entzogen würde, wie dies in US 2008/0178590 A1 beschrieben ist. Dort muss die der Verdichterluft entzogene Wärme im Gasturbinenprozess berücksichtigt werden. Mit der erfindungsgemäßen Ausgestaltung des Kühlkreislaufs ist daher eine effektivere Kühlung des Wandlers möglich, ohne dass ein Eingriff in den den Wandler antreibenden Prozess nötig ist und ohne dass Nutzleistung des Wandlers zum Antreiben der Kältemaschine herangezogen werden muss. Selbst wenn zusätzlich zur Abwärme des Wandlers weitere Wärme zum Antreiben der Absorptionskältemaschine nötig ist und diese Abwärme im Gasturbinenprozess zu berücksichtigen ist, so ist doch die im Gasturbinenprozess zu berücksichtigende Wärme gegenüber dem Stand der Technik verringert.

Die der Absorptionskältemaschine zugeführte Wärme muss selbstverständlich wieder abgeführt werden. Zu diesem Zweck umfasst die Absorptionskältemaschine einen Kühler, der in Strömungsrichtung eines in der Absorptionskältemaschine strömenden Kältefluids zwischen dem Austreiber und dem Verdampfer angeordnet ist. Der Kühler dient zum Abkühlen des ausgetriebenen Kältefluids, um so eine Kondensation des Kältefluids herbeizuführen. Der Kühler kann daher auch als Kondensator bezeichnet werden. Der Kühler führt dann die entzogene Wärme beispielsweise an die Umgebung ab. Die Kühleinheit der Absorptionskältemaschine kann insbesondere auch in den Kühler des Kühlkreislaufs, der beispielsweise ein Kühlturm sein kann, integriert sein.

Eine erfindungsgemäße Kraftwerksanlage umfasst eine Turbine, insbesondere eine Gasturbine, einen Generator und einen erfindungsgemäßen Kühlkreislauf zum Abführen von Abwärme des Generators. Der erfindungsgemäße Kühlkreislauf ermöglicht dabei das Absenken der Temperatur des in den Generator einströmenden Kältemittels zum Kühlen des Generators und erhöht so die Kühlleistung. Dadurch kann die Kupfertemperatur des Generators weiter abgesenkt werden.

Die mit der Erfindung erzielbare Reduktion der Kupfertemperatur des Generators ermöglicht ein Nachrüsten einer Gasturbinenanlage zur Leistungssteigerung, wobei die Kupfertemperatur weniger limitierend als ohne den erfindungsgemäßen Kühlkreislauf wirkt. Außerdem erfordert das Nachrüsten keinen Eingriff in den Gasturbinenprozess, wie dies notwendig wäre, wenn die Wärme zum Antreiben der Absorptionskältemaschine der Verdichterluft entzogen würde, oder zumindest einen verringerten Eingriff. Zwar kann die Wärme zum Antreiben der Absorptionskältemaschine wie in US 2008/0178590 A1 ebenfalls beschrieben auch dem Abgas der Gasturbine entzogen werden, jedoch könnte auch dies Prozessparameter beeinflussen, beispielsweise wenn die Gasturbine in Kombination mit einer Dampfturbine betrieben würde, in der die Abwärme der Gasturbine zum Antreiben der Dampfturbine genutzt wird. Im Gegensatz dazu wird in der vorliegenden Erfindung zumindest größtenteils Wärme zum Antreiben der Absorptionskältemaschine genutzt, die ansonsten nutzlos verloren ginge und daher werden zu einer Änderung eines Prozessparameters der Kraftwerksanlage, noch zu einer Reduktion der Nutzleistung führt.

Weitere Merkmale, Eigenschaften und Vorteile der vorliegenden Erfindung ergeben sich aus der nachfolgenden Beschreibung von Ausführungsbeispielen unter Bezugnahme auf die beiliegenden Figuren.
- Figur 1: zeigt beispielhaft eine Gasturbine in einem Längs- teilschnitt.
- Figur 2: zeigt einen erfindungsgemäßen Kühlkreislauf.

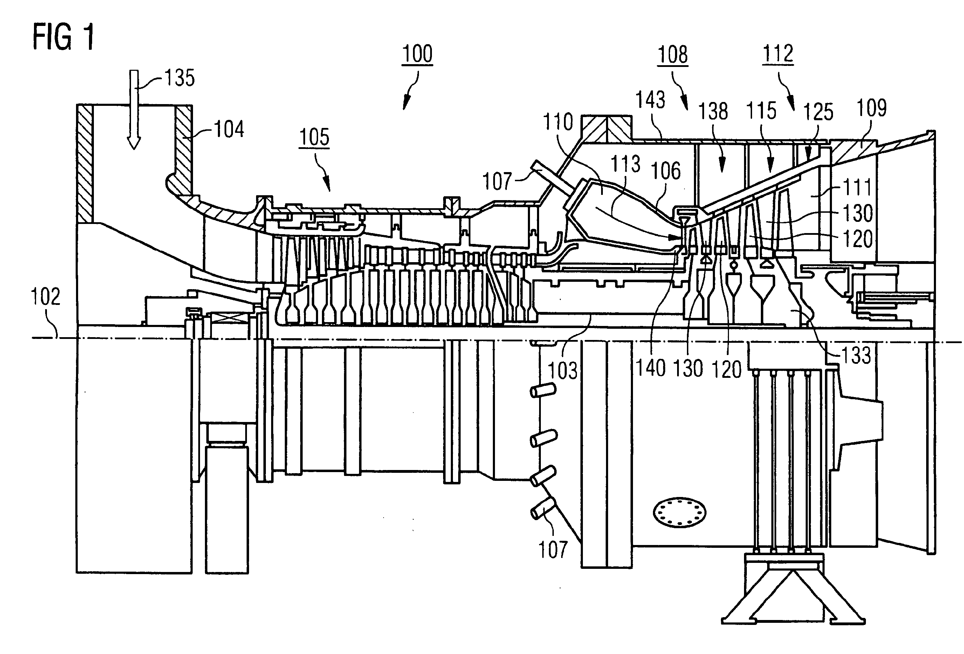

Die Figur 1 zeigt beispielhaft eine Gasturbine 100 in einem Längsteilschnitt.

Die Gasturbine 100 weist im Inneren einen um eine Rotationsachse 102 drehgelagerten Rotor 103 mit einer Welle 101 auf, der auch als Turbinenläufer bezeichnet wird.

Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.

Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.

Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.

An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.

Um den dort herrschenden Temperaturen standzuhalten, können diese mittels eines Kühlmittels gekühlt werden.

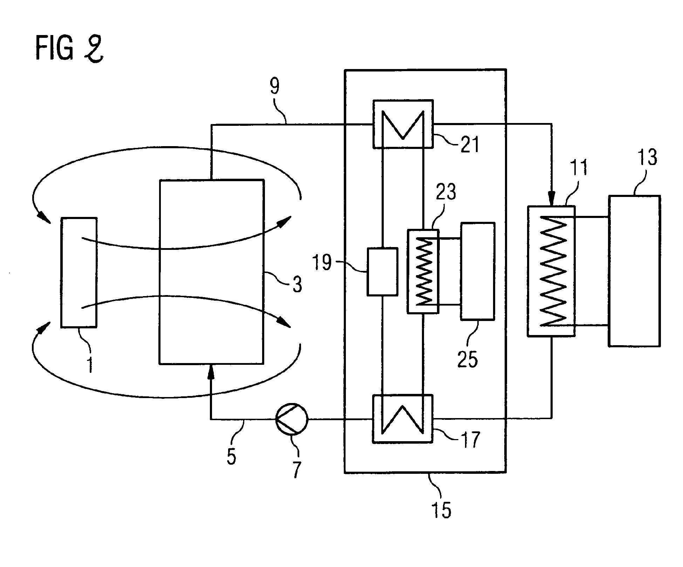

Ein Kühlkreislauf für den von der Gasturbine aus Figur 1 angetriebenen Generator 1 ist in Figur 2 dargestellt. Der Generator ist luftgefüllt, wobei die Wärme der vom Generator 1 erwärmten Luft in einem Generatorluftkühler 3 der Luft entzogen wird. Der Generatorluftkühler 3 ist Teil eines Kühlkreislaufs zum Kühlen des Generators, in dem die Wärme der erwärmten Luft auf ein Kältemittel, im vorliegenden Ausführungsbeispiel Wasser, übertragen wird. Statt Wasser können aber auch andere geeignete Kältemittel zur Anwendung kommen.

Das Wasser wird mittels einer in einem Vorlauf 5 angeordneten Pumpe 7, die den Kühlkreislauf in Gang hält, in den Generatorluftkühler 3 gepumpt, wo es die in der Luft befindliche Generatorabwärme aufnimmt. Über einen Rücklauf 9 wird das erwärmte Wasser an einen Kühler 11 in Form eines Wärmetauschers geleitet, wo die im Wasser enthaltende Wärme im vorliegenden Ausführungsbeispiel an den Kühlwasserkreislauf eines Kühlturms 13 abgegeben wird. Das nach dem Durchlaufen des Wärmetauschers 11 wieder abgekühlte Wasser wird schließlich über den Vorlauf 5 dem Generatorluftkühler 3 mittels der Pumpe 7 wieder zugeführt.

Um das Wasser des Kühlkreislaufs weiter zu kühlen ist zudem eine Absorptionskältemaschine 15 vorhanden, die dem Wasser weitere Wärme entzieht. Diese umfasst einen weiteren Kühlkreislauf mit einem verdampfbaren Kältefluid, einem Verdampfer 17, in welchem das Kältefluid durch Aufnahme von Wärme aus dem bereits durch den Kühler 11 abgekühlten Wasser des Verlauf des Kühlkreislaufes des Generators verdampft wird, einen Absorber 19, in dem der Kältemitteldampf von einer Flüssigkeit aufgenommen, d.h. absorbiert wird, und einen Austreiber 21, in dem das Kältemittel wieder ausgetrieben, d.h. aus der Flüssigkeit, von der es im Absorber absorbiert worden ist, wieder desorbiert wird.

Zum Austreiben des Kältefluids ist ein Wärmeeintrag in den Austreiber nötig. Der Wärmeeintrag erfolgt über einen Wärmeaustauscher von dem durch den Generatorluftkühler erwärmten Wasser im Rücklauf 9. Um das ausgetriebene Kältefluid wieder in den verdampfbaren Zustand zu bringen, wird dieses in einem Kondensator 23 durch Wärmeentzug kondensiert, bevor es an den Verdampfer 17 zurückgeführt wird. Die bei der Kondensation im Kondensator 23 anfallende Kondensationswärme wird mittels eines weiteren Kühlkreislaufs 25 an die Umgebung abgegeben. Hierbei kann insbesondere auch der bereits erwähnte Kühlturm 13 Verwendung finden.

Als Kältefluid kann beispielsweise Wasser und als absorbierende Flüssigkeit Lithiumbromid Verwendung finden. Aber auch andere Kombinationen aus Kältefluid und absorbierender Flüssigkeit sind möglich, beispielsweise Ammoniak als Kältefluid und Wasser als absorbierende Flüssigkeit.

Mittels der Absorptionskältemaschine 15 wird das im Kühlkreislauf zur Generatorkühlung befindliche Wasser durch zwei Prozesse weiter gekühlt. Zum einen erfolgt ein Kühlen des warmen Wassers im Rücklauf 9 dadurch, dass das Kältefluid der Absorptionskältemaschine beim Austreiben Wärme aufnimmt. Zum anderen erfolgt ein Kühlen des im Vorlauf 5 befindlichen, bereits durch den Wärmetauscher 11 gekühlten Wassers dadurch, dass das Kältefluid beim Verdampfen im Verdampfer 17 Wärme aus dem Wasser aufnimmt.

Die Absorptionskältemaschine kühlt also das Wasser im Kühlkreislauf, wobei die zum Antreiben der Absorptionskältemaschine notwendige Wärme ebenfalls dem Kühlkreislauf entnommen wird und daher zu einer weiteren Abkühlung des im Kühlkreislauf befindlichen Wassers führt. Für den Fall, dass die im Wasser des Rücklaufs 9 befindliche Wärme nicht ausreicht, den Austreiber 21 zuverlässig zu betreiben, kann diesem Wärme einer zusätzlichen Wärmequelle, beispielsweise Wärme aus dem Abgas der Gasturbine zugeführt werden.

Mit dem erfindungsgemäßen Kühlkreislauf kann der Generatorkühlluft im Generatorluftkühler 3 gegenüber einem Kreislauf ohne Absorptionskältemaschine mehr Wärme entzogen werden, sodass die zur Generatorkühlung verwendete Kühlluft eine niedrigere Kaltgastemperatur aufweist. Dadurch lässt sich die Kupfertemperatur beim Betrieb des Generators senken, wodurch sich wiederum Potential für eine Leistungssteigerung des Generators und damit der den Generator antreibenden Gasturbine ergibt. Insbesondere ist es auch möglich, die Absorptionskältemaschine in einen bestehenden Generatorkühlkreislauf nachträglich einzubauen, so dass der Spielraum für eine Leistungssteigerung der Gasturbinenanlage im Rahmen eines Upgrades erhöht wird.

## Patentansprüche

1. Kühlkreislauf zum Abführen von Abwärme aus einer Kühleinrichtung (3) eines elektromechanischen Wandlers (1) mit
- einem Kältemittel,
- einem Kühler (11) zum Entzug von Wärme aus dem Kältemittel,
- einem die Kühleinrichtung (3) des Wandlers (1) mit dem Kühler (11) zum Leiten warmen Kältemittels verbindenden Rücklauf (9),
- einem den Kühler (11) mit der Kühleinrichtung (3) des Wandlers (1) zum Leiten kühlen Kältemittels verbindenden Vorlauf (5), und
- einer Absorptionskältemaschine (15) zum Entzug von Wärme aus dem Kältemittel,
wobei die Absorptionskältemaschine (15) durch die Wärme des im Rücklauf (9) befindlichen warmen Kältemittels angetrieben wird,
**dadurch gekennzeichnet, dass**
die Absorptionskältemaschine (15) einen Verdampfer (17) und einen Austreiber (21) umfasst,
wobei der Verdampfer (17) mit dem Vorlauf (5) zur Aufnahme von Wärme verbundenen ist und der Austreiber (21) mit dem Rücklauf (9) zur Aufnahme von Wärme verbunden ist.

2. Kühlkreislauf nach Anspruch 1,
**dadurch gekennzeichnet, dass**
die Absorptionskältemaschine (15) eine Wasser-Lithiumbromid-Absorptionskältemaschine oder eine Ammoniak-Wasser-Absorptionskältemaschine ist.

3. Kühlkreislauf nach Anspruch 1 oder Anspruch 2,
**dadurch gekennzeichnet, dass**
die Absorptionskältemaschine (15) eine Kühleinheit (23) umfasst, die in Strömungsrichtung eines in der Absorptionskältemaschine (15) strömenden Kältefluids zwischen dem Austreiber (21) und dem Verdampfer (17) angeordnet ist.

4. Kühlkreislauf nach Anspruch 3,
**dadurch gekennzeichnet, dass**
die Kühleinheit (23) der Absorptionskältemaschine (15) in den Kühler (11) des Kühlkreislaufs integriert ist.

5. Kraftwerksanlage mit einer Turbine, einem Generator (1) und einem Kühlkreislauf zum Abführen von Abwärme des Generators (1),
**dadurch gekennzeichnet, dass**
der Kühlkreislauf nach einem der Ansprüche 1 bis 4 ausgebildet ist.

6. Kraftwerksanlage nach Anspruch 5,
**dadurch gekennzeichnet, dass**
die Turbine eine Gasturbine ist.

## Claims

1. A cooling circuit for removing waste heat from a cooling device (3) of an electromechanical converter (1) comprising
- a chilling medium,
- a cooler (11) for extracting heat from the chilling medium,
- a return (9), connecting the cooling device (3) of the converter (1) to the cooler (11) for conducting warm chilling medium,
- a feed (5), connecting the cooler (11) to the cooling device (3) of the converter (1) for conducting cool chilling medium, and
- an absorption chiller (15) for extracting heat from the chilling medium,
the absorption chiller (15) being driven by the heat of the warm chilling medium that is in the return (9), **characterized in that** the absorption chiller (15) comprises an evaporator (17) and a generator (21), the evaporator (17) being connected to the feed (5) to absorb heat and the generator (21) being connected to the return (9) to absorb heat.

2. Cooling circuit according to Claim 1, **characterized in that** the absorption chiller (15) is a water/lithium-bromide absorption chiller or an ammonia/water absorption chiller.

3. Cooling circuit according to Claim 1 or Claim 2, **characterized in that** the absorption chiller (15) comprises a cooling unit (23), which is arranged between the generator (21) and the evaporator (17) in the direction of flow of a chilling fluid flowing in the absorption chiller (15) .

4. Cooling circuit according to Claim 3, **characterized in that** the cooling unit (23) of the absorption chiller (15) is integrated in the cooler (11) of the cooling circuit.

5. Power generating plant with a turbine, a generator (1) and a cooling circuit for removing waste heat from the generator (1),
**characterized in that**
the cooling circuit is formed according to one of Claims 1 to 4.

6. Power generating plant according to Claim 5, **characterized in that** the turbine is a gas turbine.

## Revendications

1. Circuit de refroidissement pour évacuer de la chaleur perdue d'un dispositif ( 3 ) de refroidissement d'un transducteur électromécanique comprenant
- un fluide frigorigène,
- un refroidisseur ( 11 ) pour retirer de la chaleur du fluide frigorigène,
- un retour ( 9 ) mettant le dispositif ( 3 ) de refroidissement du transducteur ( 1 ) en communication avec le refroidisseur ( 11 )pour conduire du fluide frigorigène chaud,
- une alimentation ( 5 ) mettant le refroidisseur ( 11 ) en communication avec le dispositif ( 3 ) de refroidissement du transducteur ( 1 ) pour conduire du fluide frigorigène froid, et
- une machine ( 15 ) frigorifique à absorption pour retirer de la chaleur du fluide frigorigène,
- dans lequel la machine ( 15 ) frigorifique à absorption est entraînée par la chaleur du fluide frigorigène chaud se trouvant dans le retour ( 9 ),
- **caractérisé en ce que**
- la machine ( 15 ) frigorifique à absorption comprend un évaporateur ( 17 ) et un bouilleur ( 21 )
- dans lequel l'évaporateur ( 17 ) communique avec l'alimentation ( 5 ) pour l'absorption de chaleur et le bouilleur ( 21 ) communique avec le retour ( 9 ) pour l'absorption de chaleur.

2. Circuit de refroidissement suivant la revendication 1, **caractérisé en ce que**
la machine ( 15 ) frigorifique à absorption est une machine frigorifique à absorption à eau-bromure de lithium ou une machine frigorifique à absorption à ammoniac-eau.

3. Circuit de refroidissement suivant la revendication 1 ou revendication 2,
**caractérisé en ce que**
la machine ( 15 ) frigorifique à absorption comprend un groupe ( 23 ) de refroidissement qui est disposé, dans le sens d'écoulement d'un fluide frigorigène passant dans la machine ( 15 ) frigorifique à absorption, entre le bouilleur ( 21 ) et l'évaporateur ( 17 ).

4. Circuit de refroidissement suivant la revendication 3,
**caractérisé en ce que**
le groupe ( 3 ) de refroidissement de la machine ( 15 ) frigorifique à absorption est intégré dans le refroidisseur ( 11 ) du circuit de refroidissement.

5. Centrale électrique comprenant une turbine, une génératrice ( 1 ) et un circuit de refroidissement pour l'évacuation de la chaleur perdue de la génératrice ( 1 ),
**caractérisée en ce que**
le circuit de refroidissement est constitué suivant l'une des revendications 1 à 4.

6. Centrale électrique suivant la revendication 5,
**caractérisée en ce que**
la turbine est une turbine à gaz.
